(19) Europäisches Patentamt
European Patent Office
Office européen des brevets

(11) EP 4 379 605 A1

(12) EUROPEAN PATENT APPLICATION

(43) Date of publication:
05.06.2024 Bulletin 2024/23

(21) Application number: 22210575.1

(22) Date of filing: 30.11.2022

(51) International Patent Classification (IPC):
G06N 3/0455 (2023.01)    G06N 3/0464 (2023.01)
G06N 3/0895 (2023.01)    G06T 17/05 (2011.01)

(52) Cooperative Patent Classification (CPC):
G06N 3/0455; G06N 3/0464; G06N 3/0895;
G06T 17/05

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Volkswagen Aktiengesellschaft
38440 Wolfsburg (DE)

(72) Inventors:
• Plachetka, Christopher
38458 Velpke (DE)
• Fringscheidt, Prof.-Ing Tim
28104 Braunschweig (DE)

(54) **METHOD FOR DETECTION OF MAP DEVIATIONS, SYSTEM AND VEHICLE**

(57) The invention refers to a method for deviation detection, system, and vehicle. The method for a detection of map deviations comprising encoding map data (55) and receiving a first feature map (57), encoding sensor data (58) and receiving a second feature map (60), wherein the sensor data is representing one or a plurality of real world objects in a vehicle environment. The method further comprising providing the first feature map (57) and the second feature map (60) as input data to a neural network (50, 53) and detecting deviations between the sensor data (55) and the map data (58).

Fig. 2

## Description

Modern vehicles, in particular automated or autonomous vehicles, are depending on the availability of high-definition (HD) map data. This map data provides the vehicle with information relevant for the driving function, for example with information on lanes for trajectory planning or on pedestrian crossings for predicting behavior.

However, the map data can become outdated due to changes in the environment (e.g., due to a construction site). Further, it may occur that the map data is already incorrect at the time of creation (e.g., due to errors in the map creation by a map supplier). These situations may result in map deviations, i.e. deviations between the stored map and the real vehicle environment. If the deviations remain undetected, a risk may occur to the vehicle and its occupants, since incorrect assumptions regarding the environment may be processed by the driving function of the vehicle or other subsystems.

The driving function of automated vehicles relies on prior knowledge regarding the stationary environment in the form of high-definition maps. Such driving function is prone to failures if the map data deviates from the real world in terms of map elements or relations between elements. In general, map deviations may be categorized into map errors, which occurred during map generation, or environment changes, which may render the map outdated during the progression of time. Dependability regarding maps requires a system that detects, specifies and corrects map deviations in order to obtain maps that are safe to use, reliable and available. In particular, the safe use of map data requires to the detection of deviations in the surrounding of the vehicle, while reliable maps may be obtained by short update cycles. Available maps despite the presence of deviations may be obtained within the vehicle by correcting deviations in real time, e.g., in construction site scenarios.

Methods and systems for detecting HD map elements are known (e.g., for road markings, traffic lights or lanes) but have disadvantages, such as a decreased performance in bad weather conditions for traffic signs, or if elements are partly occluded. Therefore, there may be a need for a deviation detection method and a system that simplifies the detection.

The present invention is providing a method, a system, and a vehicle.

The suggested method according to the present invention is a method for a detection of map deviations, which may be a computer-implemented method. The method comprising encoding map data and receiving a first feature map, encoding sensor data and receiving a second feature map, wherein the sensor data is representing one or a plurality of real world objects in a vehicle environment. Further, the method comprising providing the first feature map and the second feature map as input data to a neural network and detecting deviations between the sensor data and the map data.

It is proposed to encode both map data and sensor data as feature maps which are input to a neural network, which then detects and specifies deviations. As a first exemplary embodiment, it may be provided detecting deviations based on a comparison, whereby map elements are extracted from sensor data using a map-supported deep neural network (DNN) for object detection and subsequently compared with the examined map elements. A second exemplary embodiment comprises a map-supported DNN for deviation detection that directly predicts deviations and omits the need for an explicit comparison.

According to an exemplary embodiment of the method, detecting deviations may be based on comparison using a map-supported object detection DNN.

It may be suggested that the network performing an object detection task uses the (deviating) map as additional input and as source of prior hypotheses for possible map element locations and features, which facilitates the object detection task by providing such prior hypotheses and contextual knowledge.

According to an exemplary embodiment of the method, detecting deviations may be provided by using a map-supported deviation detection DNN.

The neural network may directly predict map deviations by incorporating a classification of the evaluation state for a map element (being a verification, insertion, deletion, or substitution) and/or by incorporating the prediction of attributional features of an element or attributional differences between a prior hypothesis and a real world element.

A map element correctly representing the real world is termed "verification". Further, a "deletion" refers to an element missing in the examined map, while an "insertion" terms a falsely existing element in the examined map. A "substitution" on the other hand indicates that an element has changed is main class but remains at a similar location, e.g., a traffic light being interchanged by a traffic sign. A more detailed definition of deviations will be provided below.

According to an exemplary embodiment, the method further comprising training detecting deviations using artificially included map deviations using a single map or using real world deviations obtained from two deviating maps.

Using artificially induced (simulated) map deviations offers the advantage of increase training data and can be understood as a data augmentation strategy. However, using real world deviations provides the network with more realistic deviations, which may increase the real world performance. Combining both strategies may also be possible.

According to an exemplary embodiment, the method further comprising utilizing specialized anchors grids predicting evaluation states and bounding shape features for each type of map elements separately.

Using separate network heads operating within a multitask DNN allows for specialized network outputs featuring predefined grids of object-placeholders (anchors). Such specialized grids allow for an individual feature extraction within each output branch, increasing the overall performance. Moreover, given enough network capacity (e.g., depending on the number of trainable parameters), the overall performance may profit from such multitask setup if predicted map elements are semantically linked, e.g., a predicted pole increases the likelihood for the presence of signs and lights.

The network may utilize specialized anchors grids predicting evaluation states and bounding shape features for each type of map elements separately, with individual thresholds being defined for each evaluation state for performance optimization.

In object detection, a threshold is typically applied to the predicted existence likelihood that indicates the presence of a real world object within an anchor (for instance, offering a single threshold for each map element type, e.g., signs). Predicting such a likelihood for each evaluation state (verification, deletion, insertion, substitution), allows for individual optimization or each threshold separately for each element type (in this case, offering four thresholds for each map element type).

According to an exemplary embodiment, the method further comprising processing three-dimensional data within the neuronal network or DNN.

By processing spatial, three-dimensional (3D) data within the DNN, the network is provided with the capability to individually detect deviation regarding vertically stacked objects. Commonly used network architectures are developed in regards to the movable parts of the environment, within which the vertical dimension is neglected. However, the present invention solves this issue by processing 3D data throughout the DNN architecture.

According to an exemplary embodiment, the method further comprising utilizing a point-based architecture for the network, performing the object detection or deviation detection for each point

According to an exemplary embodiment, the method may be performed in a real time mode (for example on board of a vehicle), or offline within a computing cluster processing large amounts of data.

Using the present invention in real time mode within the vehicle offers an increased safety of the driving function as map deviations ahead of the vehicle can be detected. However, to compute map updates, it may be beneficial to record sensor data in the presence of detected deviations, with a subsequent over-the-air transmission to a computing cluster, within which more performant but slower network architecture can be applied, e.g., to generate map update proposals automatically.

According to an exemplary embodiment, the method may be applicable for the deviation detection of traffic signs, traffic lights, pole-like objects, curbs, lanes, markings, and/or construction site elements such as fences, delineators, and cones.

The integration of further map element types into the proposed system (and its variants) is also possible. However, detecting map deviations regarding the map element types mentioned is considered as essential to ensure the safety of the automated vehicle. Also, predicting all element types simultaneously may even increase performance given a network with enough capacity to model respective features, as for instance, poles, signs, and lights often occur as one semantic group.

The system of the present invention relates to a system for a detection of map deviations comprising a neuronal network comprising an encoder, a backbone and a decoder, and a map processing path comprising a map encoding component, wherein the backbone is receiving a first input from the encoder, wherein the first input is obtained by encoding sensor data; and wherein the backbone is receiving a second input from a map encoding component, wherein the second input is a second feature map comprising encoded map data.

The system may be understood as a network of components or as an architecture for providing data processing. The term "network" may be understood in specific embodiments also as neural network or as deep neural network (DNN = deep neural network).

The network's encoder extracts features for groups of points within each voxel after discretization, providing the first feature map. The map is encoded into a second feature map. Subsequently, both feature maps are provided as input to the network's backbone for further feature extraction. Providing the map as additional input provides the network with possible element locations and features. Also, such input allows for the internal modelling of expected sensor data distributions for each map element type, which may increase the system's deviation detection performance in the presence of degenerated sensor data with only few measurements (e.g., LiDAR points) being available, for instance in bad weather scenes or scenes featuring (part) occlusions.

According to an exemplary embodiment, the system further comprising a comparison component which is adapted to receive a deviating list of map elements and a predicted list of map elements as input.

Regarding this exemplary embodiment, the DNN is trained to provide an object detection (e.g., predicting signs, lights, and poles simultaneously). In this case, despite the possible usage of the map as additional input, the network's output provides a list of map elements. To obtain deviations regarding the existence of map elements in the examined map, a comparison of respective lists of elements may be required. Such comparison requires criteria regarding the association of map elements of the same type (e.g., to associate two lists of traffic signs).

According to an exemplary embodiment, the neuronal network is providing an output to a post-processing component, wherein the post-processing component is providing an output to the comparison component.

To obtain the list of predicted map elements from an anchor grid, post-processing may be applied to the anchor grid, e.g., filtering anchors by applying a threshold regarding the predicted existence likelihood above which anchors are considered as valid object prediction, or filtering overlapping object predictions using element type-specific association criteria.

According to an exemplary embodiment of the system, the first input is a three dimensional voxel grid.

According to an exemplary embodiment, the system is an onboard system in a vehicle or an offline system processing large amounts of data, e.g., for generating HD maps.

The object of the present invention is further solved by a vehicle, in particular an autonomous driving vehicle, comprising the suggested system.

The vehicle may be an automated vehicle which is able to at least partly drive without any human interaction. Further, the vehicle may be an autonomous vehicle, preferably of level 4 or level 5 of autonomous driving category.

Exemplary embodiments of the present invention are described below with reference to the accompanying drawings, which are not necessarily drawn to scale. It should be understood that the described and illustrated features of the exemplary embodiments in the figures may be combined to further embodiments. Furthermore, the exemplary embodiments can also be added by further features of the invention and its embodiments. Elements of the same or similar function are provided with the same reference signs in the figures.

The drawings illustrate:

Fig. 1    a first exemplary embodiment of an overall system for map deviation detection (MDD);
Fig. 2    a second exemplary embodiment of a system for the deviation detection component;
Fig. 3    a third exemplary embodiment of a system for the deviation detection component; and
Fig. 4    a fourth exemplary embodiment of a network architecture.

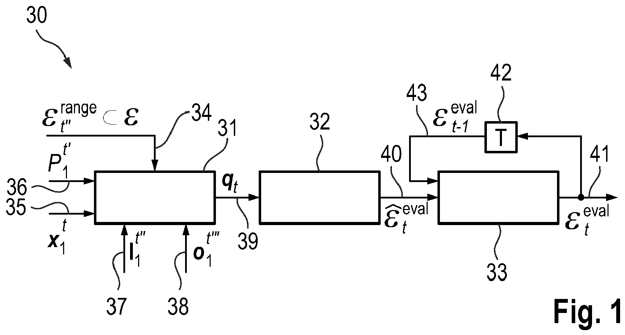

Fig. 1 illustrates a first exemplary embodiment of an overall system 30 for map deviation detection (MDD). The system 30 for detecting map deviations is shown with its main components in Fig. 1. The system 30 comprises three main components: a data association component 31, a deviation detection component 32 and a recursive state estimation component 33.

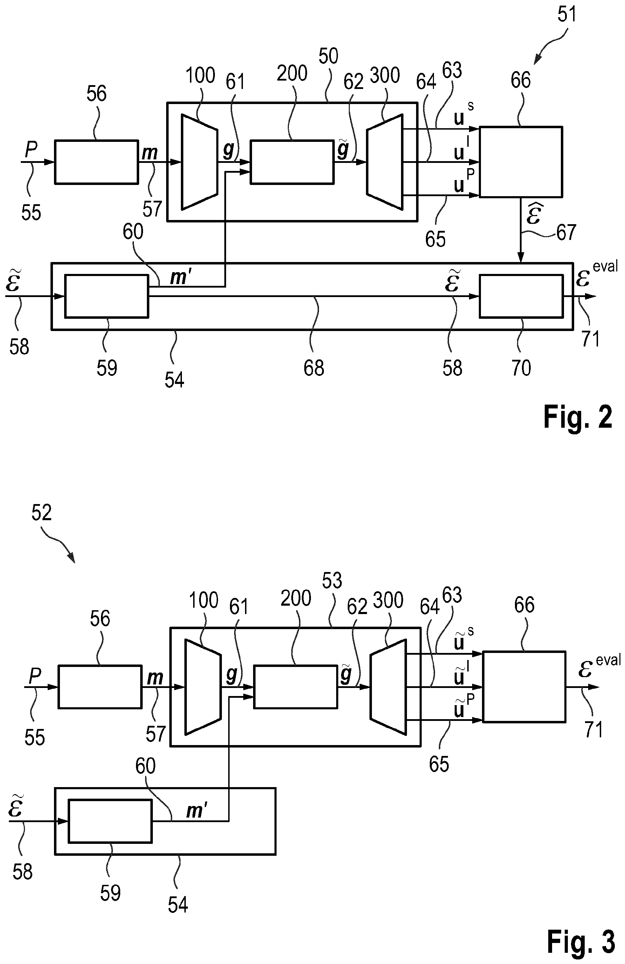

An HD map may be understood as a set of map elements (e.g., traffic signs or lane markings) and relations between these map elements. Map elements may be categorized into physical (real world objects) and semantical elements (mental models, e.g., lanes or roundabouts), and may be differentiated by a type (major class, e.g., sign, light, or pole) and a set of (mandatory or characteristic) attributes (e.g., subclass or orientation). Deviating map items may comprise both elements and relations. Considering deviations regarding map elements is a focus. To obtain map deviations, a set of map elements extracted from sensor data (see 67 in Fig. 2) may be associated with a set of examined, presumably deviating map elements (see 58 in Fig. 2 and Fig. 3), which yields a set of evaluated map elements (see 71 in Fig. 2 and Fig. 3). In Fig. 2, the association step is carried out explicitly by a separate comparison component 70, while in Fig. 3, such association is performed implicitly within the deviation detection DNN 53 itself.

Data Association Component

In the data association component 31, data packets from asynchronous data streams are first related and synchronized. This is useful because sensors (e.g., camera and LiDAR) and subsystems (e.g., localization) provide their data with different timestamps. Especially sequences of images 35, laser scans 36, localization data in the form of global poses on a map 37 (e.g., encoded in WGS84 or UTM as global coordinate systems) and vehicle odometry data 38 may be considered as input data (indices and exponents illustrated in Fig. 1 indicate a sequence from 1 to e.g., $t$). The integration of radar data or other sensors is also possible as input data.

The number of elements of the HD map $\varepsilon_{t''}^{\text{range}}$ 34 (e.g., signs, traffic lights, markings, etc.) that are within the range of the sensors or within the range of the deviation detection method (given by the location of the vehicle on the map determined by the localization at the time $t''$), are combined with the closest sensor data (camera, LiDAR, odometry) to form a sample $q_t$ 39. The range of the method may be smaller than the range of the sensors, since, for example, the density of the point cloud of a LiDAR scan may decrease as the distance from the sensor origin increases, so that object prediction (estimation) may be no longer possible.

In a first stage of data processing, the data association component 31 is provided for the association of data packets of asynchronous data streams. For example, a camera delivers images at a significantly higher frequency (20 Hz) compared to the provision of point clouds by the laser scanner (10 Hz). For this purpose, a data packet from a sensor is selected as a time base in order to generate a sample $q_t$ 39, for example a point cloud from the laser scanner. Since point clouds are usually generated by rotating laser scanners, point clouds encompass a range of different timestamps.

To associate image data and a localization pose (pose = position and orientation on the map) to this point cloud, the mean timestamp of the point cloud is selected (mean of the timestamp of the first and last measurement). The image with the smallest absolute timestamp difference to the mean timestamp of the point cloud may be selected from the stream of data packets from the camera. The procedure for the localization poses may be performed analogous. With regard to the odometry data (typically generated by 100 Hz) all measurements within the first and the last timestamp can be used for a next step. It would be also possible utilizing the measurement with the smallest time difference to the mean timestamp of the point cloud as an approximation.

Images, point clouds (usually generated by a rotating laser scanner), localization poses, and odometry data may be generated at different timestamps ($t$, $t'$, etc.). In order to superimpose map data and sensor data as precisely as possible in terms of their spatial position, the data may be synchronized with one another. In a preferred embodiment, this is done with reference to the timestamp of the image at timestamp t, since map elements and point measurements may be moved more easily than pixels in an image in order to improve the spatial alignment of map and sensor data.

In the present example, the camera may create an image at time t. Surrounding map elements $\mathcal{E}_{t''}^{\mathrm{range}}$ 34 may be determined at a slightly later time $t''$ by the localization subsystem. Due to the time difference $\Delta t = t'' - t$, map elements may be not projected to the right place when projecting into the image plane. For this reason, the position of the map elements at time t (being the timestamp of the image selected for synchronization) instead of at time $t''$ would be necessary (given by the localization pose). The position of map elements at time $t$ can be estimated from the own movement of the vehicle (using the respective odometry data) and the time difference.

For determining the required translation and rotation of the map elements to estimate their position at time $t$, different approaches may be applied.

As a first possible approach ("first approach"): The translation and rotation necessary to improve the spatial alignment of both map elements and point cloud may be obtained using a single odometry measurement. To this end, the odometry measurement at timestamp $t'''$ with the smallest timestamp difference regarding the image timestamp $t$ is selected. Alternatively, the odometry measurement closest to the timestamp of the localization pose or closest to the mean timestamp of the point cloud would also be possible; the inaccuracy regarding the spatial alignment of synchronized map elements with the image data would be similar in all cases.

As a second possible approach ("second approach"): The translation and rotation may be determined based on the path traveled by the vehicle within the time difference $\Delta t$. To this end, individual odometry measurements can be integrated within the time difference $\Delta t$ to obtain the path traveled.

A synchronization of the point cloud may be performed according to the same principle. Each individual point of the point cloud may be shifted using the first or the second approach. For points belonging to stationary map elements, the synchronization may lead to an optimization of the overlap of point measurements and map elements. For points that belong to mobile road users, the synchronization is not exact due to the movement of these road users - but it is not required either. Depending on the runtime requirements, two variants of procedures can be used.

First variant: Each single point may be synchronized individually (using the first or the second approach). This synchronization operation may be computationally intensive and may be preferably implemented in an offline application.

Second variant: The point cloud may be divided into radial sectors (e.g., four in number). The translation and rotation may be calculated for all points in the sectors using the first or second approach. This may reduce advantageously the computing effort required to synchronize all points.

Deviation Detection Component

The deviation detection component 32 evaluates the sample 39 and generates a set of evaluated map elements $\hat{\mathcal{E}}_t^{\mathrm{eval}}$ 40 with each element in this set comprising an existence likelihood and respective continuous as well as discrete attributes (e.g., the position in Cartesian coordinates or the class of a sign). A set of evaluated map elements $\mathcal{E}_t^{\mathrm{eval}} = V_t \cup U_t \cup F_t$ includes correctly associated (verified) elements (verifications $V_t$), non-evaluated occluded elements $U_t$ and deviating map elements $F_t$. The set of deviating map elements $F_t = F_t^{\mathrm{PS}} \cup F_t^{\mathrm{A}}$ on the other hand may comprise a set of physical and semantic deviations $F_t^{\mathrm{PS}}$ and elements with deviating attributes $F_t^{\mathrm{A}}$. A missing lane is an example of a semantic map element, which may result from physical lane markings. The deviation detection component 32 may detect deviations regarding the existence of physical and semantic elements $F_t^{\mathrm{PS}} = D_t \cup I_t \cup S_t$: elements missing in the map (deletions $D_t$), elements that exist incorrectly in the map (insertions) $I_t$ or elements that are substituted by another element in the map (substitutions) $S_t$. Also, the deviation detection component detects deviating elements $F_t^{\mathrm{A}}$ regarding their respective attributes (discrete or continuous). Verifications, deletions, insertions, substitutions, and elements featuring attributional deviations may be understood as separate lists, whereby a map element can only be assigned to one of these lists.

The detection of attributional deviations may be done in a single processing step or using a two-step strategy. Regarding such two-step variant, a map element that is initially classified as verification may be included into a list of map elements comprising attributional deviations and then be deleted from the (initial) list of verifications.

A deviation detection component may generate an individual set of evaluated map elements $\mathcal{E}_{t''}^{\text{range}}$ 40 for each sample $q_t$ 39. The determined values regarding the existence of map elements (e.g., measured by an existence likelihood) or their attributes (e.g., a continuous orientation of a sign) may vary from sample to sample. A component for Recursive State Estimation 33 may be connected downstream of the deviation detection component 32 for detecting deviations. This may stabilize the measurements spatially and temporally by accumulating individual measurements, e.g., as a stabilization of varying existence likelihoods or orientation values over time. Various methods may be applied, e.g., the method of least squares, Kalman filtering or Bayesian state estimation.

Deviation Detection

The Deviation Detection component 32 receives input data 39. The sensor data (e.g., from the LiDAR) is first transformed to a feature space, which is specified by the selected algorithm for object detection (conventional or AI-based). For example, there are algorithms that convert the point cloud into a voxel grid, into a representation in a bird's eye view or into a 2.5D depth image (with the depth coded as "pixel") before object detection.

Subsequently, the selected processing method (e.g., a neural network) may detect map elements in this one sensor modality (e.g., only the LiDAR data) and outputs them as a list of individual elements. The detections may be output as an object list of variable length (e.g., signs, traffic lights, etc.) plus their detection uncertainty (e.g., in the form of an existence likelihood in the range between 0 and 1. The deviation detection is then carried out for example by comparing two lists with the map data (see comparison component 70 of Fig. 2): the list of detected objects with the list of (examined) map elements within range.

In this comparison, the map elements of both lists should be associated to each other in order to determine the amount of deletions, insertions and substitutions (association of map elements). Here, for each map element a set of (possibly different) association metrics may be defined in order to measure the overlap of the detected map elements with the elements stored in the map. For example, such a metric provides 0 if map elements do not overlap at all, and provides 1 in case of complete overlap.

After a performed association of detected elements with those stored in the map, the stored map elements associated with detected objects may be further evaluated in detail to determine elements with deviating attributes. These may include deviating continuous attributes (e.g., the orientation of a traffic light) or discrete attributes (e.g., the class of a sign). The attributional deviation may be determined by comparing the value of an attribute of a detected map element with the respective attribute of the stored element.

A two-stage procedure may be applied to evaluate the correctness of discrete attributes of an element that feature a large number of possible values, e.g., the classification of a sign (e.g., "Stop" sign). First, the position of the element may be determined using the aforementioned method. The position of the sign may then be projected into the image of a front camera using the camera parameters (intrinsic and extrinsic). The image section obtained from this can be classified, for example, using a neural network. Such procedure simplifies the detection task into a classification task, with the latter typically providing a higher performance. Finally, the class determined in this way may again be compared with the class of the stored element in order to determine any deviations.

System variants for the deviation detection component may use the map as an initial estimate of the environment. This enables in an easy manner the verification of existing map elements, especially in the case of partial occlusion of map elements and sensor data of reduced quality (e.g., featuring a lower point cloud density in bad weather conditions), since no complete object detection without context has to be carried out. Instead, the existing sensor data has only to be compared with an existing map hypothesis in order to confirm an element or to detect substitutions or insertions. For the detection of deletions (elements missing in the map), the provision of existing map hypotheses can also be advantageous due to the inclusion of contextual knowledge about the scene within the object detection. Thereby, such variants incorporate the detection of deviations regarding in the main class of an element (e.g., sign, traffic light, post) and deviations regarding their continuous attributes. Deviations regarding discrete attributes featuring a large number of possible values, such as a subclass (e.g., stop sign, speed limit etc.), may be evaluated using the aforementioned two-stage process using specialized classification algorithms.

Map-Supported Object Detection

Fig. 2 illustrates a second embodiment 51 for deviation detection, which provides a "Map-Supported Object Detection". The second embodiment is a system variant featuring a deep neural network for object detection. The object detection is performed in a neural network 50, in particular in a DNN, and applies the (encoded) deviating map as additional input 60 to the object detection DNN 50. This may facilitate the detection task as the network can leverage the map as source of initial hypotheses regarding possible element locations and features. Additionally, the map 58 may provide contextual knowledge, e.g., locations for poles increasing the likelihood for traffic signs. However, as the map 58 may contain deviations, the network should not rely on the map 58 only to either detect objects missing in the map (deletions) or falsify existing map hypotheses (insertions or substitutions) in 58, but should decide internally when to rely on sensor data or map data, respectively.

The map elements may then be using sensor and deviating map data in the network 50, yielding a set of predicted map elements 67, which is then compared to the examined set of (deviating) map elements 58 to obtain the set of evaluated map elements 71 comprising respective map deviations.

Regarding the point cloud input, a point cloud 55 as unordered set of points is first sorted into a spatial voxel grid $m$ 57 of fixed size featuring three spatial dimensions (understood here as "LiDAR feature map"). The DNN 50 uses an encoder stage 100 to learn an optimal feature representation for points contained in each voxel, which yields the encoded LiDAR feature grid $g$ 61 as input to the backbone 200 that preserves the spatial dimensions.

The backbone 200 of the network further may extract abstract features of higher semantics and provides the extracted feature grid as input to the network decoder 300, in particular to the network heads.

The decoder 300 may comprise three individual network heads that operate in a multitask fashion and may provide output feature maps, comprising existence likelihoods and bounding shapes for traffic signs 63, traffic lights 64, and poles 65, for instance, or further map element types. In this embodiment 51, object predictions are may be made using an output grid of predefined objects, so-called anchors. For each anchor (e.g., one being placed in each voxel of the output voxel grid), an existence likelihood and a set of bounding shape parameters are predicted. For each element type, a specialized network head featuring a specialized anchor grid is designed, each featuring default element shapes (regarding position and size) that are adopted by the network to facilitate the object detection task.

In a post-processing component 66, these respective output feature maps 63, 64, 65 are converted into the set of predicted map elements 67 as input to the comparison component 70 for a comparison with the map 58.

To incorporate the map 58, the map supported object detection of Fig. 2 utilizes the encoded deviating map as additional input $m'$ 60 (referred to as "map feature map") to the backbone 200.

To obtain $m'$, the system 51 of Fig. 2 provides a map encoding component 59, whereby map elements in 58 may be matched to a voxel grid of the same size as the encoded LiDAR grid $g$ 61. To obtain map feature vectors contained in $m'$ 60, map elements 58 may be matched to voxels in the spatial grid of 60, whereby a single element can match with multiple voxels. Such feature vectors may incorporate the (main) class of a matching element (e.g., sign, light, marking, etc.) and respective regression features (e.g., position, width, height, etc.). For such matching, it would be suitable to approximate map elements using cuboid shapes. Such an approximation may provide a reduced runtime during training and inference. Also, the integration of subclasses (e.g., class of a traffic sign) may be possible.

To provide the map feature map to the backbone, the examined (deviating) map elements 58 are first encoded to obtain $m'$ 60 and then concatenated with the encoded LiDAR grid $g$ 61 in the network 50. This method may be considered as "middle fusion".

Moreover, also an "early fusion" method may be considered, whereby map feature vectors (formerly contained in $m'$) obtained from the map elements are attributed to LiDAR points in close proximity to respective map elements as a feature augmentation. For instance, instead of four features being provided by each point of the point cloud (comprising the three-dimensional Cartesian coordinate and the intensity of the reflected beam), each point may also provide the additional map features (comprising the encoded main class and the regression features for instance). To obtain the map features for each point in $m$, different strategies may be applied. First, each point may be sorted into the spatial voxel grid of the map feature map $m'$ to obtain the respective map feature vector. Second, for each point, the closest map element in the list of examined map elements 58 may be determined (e.g., using the Euclidean distance and applying a threshold value to determine whether the point matches with the element). If a point matches with an element, the respective element may subsequently be encoded and augmented to the point's features contained in $m$. All points that do not match with an element may be augmented with the respective map features being set to zero. Thus, in the early fusion strategy, the map data is fused with the LiDAR data even before the LiDAR data is encoded using the Encoder 100.

Moreover, a camera modality can be integrated. For instance, a bounding box for each individual voxel can be projected into the camera image to crop and resize respective RGB features (or abstract features, e.g., obtained by another DNN for semantic segmentation), which subsequently can be used as a voxel's feature vector. This way, a camera feature map $m''$ may be generated and concatenated to $g$ in the same way is the map feature map $m'$. Alternatively, before projection, the more abstract features may be extracted from RGB features, e.g., using another neural network for image segmentation. Such network can be integrated into the training process, thus, being trained in an end-to-end fashion. Incorporating the camera modality may increase the performance gain obtained by integrating the camera modality. Also here, an early fusion may be considered, by augmenting LiDAR points using either RGB or extracted abstract features from the camera image, which may be obtained by projecting respective LiDAR points into the camera image.

Map-Supported Deviation Detection

Fig. 3 illustrates a third embodiment 52 for deviation detection, which provides a "Map-Supported Deviation Detection". The third embodiment 52 is a system variant featuring a deep neural network for deviation detection. In this embodiment, a DNN 53 may directly predict map deviations instead of performing an object detection and obtaining deviations by comparison with the (deviating) map. Thus, in this embodiment omitting the step of a comparison would be possible, which may be present in the second embodiment 51.

Instead of only providing the additional map input as suggested for the second embodiment of Fig. 2, the network 53 of Fig. 3 may directly classify the evaluation state (verification, deletion, insertion, or substitution) for each map element individually by using a specialized loss function, with a changed network output including a classification of the evaluation state.

Thus, the network 53 may directly evaluate an existing element hypothesis by comparing available sensor data to map data. Hence, the DNN 53 in Fig. 3 may model expected sensor data distributions for specific map elements internally to deduce the evaluation state by comparing sensor data to map hypotheses. This method may result in a high performance, especially in the presence of degenerated sensor data, where only few LiDAR points are available during evaluation.

To incorporate the classification of evaluation states into the network 53, the prediction of the existence likelihood for an object anchor in the second embodiment of Fig. 3 may be replaced by the prediction of class-specific likelihoods for each anchor, here in this example four in number. If no element is overlapping with an anchor, all four class probabilities should be set to zero during training of the network 53. An individual threshold value can be set for each of the class likelihoods, from which a deviation may be generated in a post-processing procedure by the post processing component 66.

Modifications of the post-processing component 66 in Fig. 3 may be implemented compared to the processing component 66 of the second embodiment in Fig. 2. Specifically, the evaluation state with the highest predicted score value is selected.

In a preferred embodiment, deviations regarding element attributes (continuous or discrete) are obtained by the post-processing component. Thus, regarding the classification of an existing map hypothesis in 58 as verification, only the main class and its location in the voxel grid of an element in 58 is considered by the network.

After the network has initially classified an element as verification and predicted its bounding shape features, attributional deviations may be obtained during post-processing. To this end, a look-up table (LUT) may be generated and utilized during inference of the network. In this table, it may be stored which anchor (given by its voxel index in the grid) is matched to which map element (e.g., given by its identifier) in the examined list of map elements 58 during map encoding. Regarding anchors that are predicted by network as verification, the LUT may indicate directly which map element was evaluated in order to obtain its original attributes for comparison with the respective predicted values, e.g., its original bounding shape features. Regarding continuous attributes, if such comparison yields a difference above a specific threshold value, an attributional deviation may be generated and the element may be deleted from the initial list of verifications. However, in an alternative embodiment, the network may directly predict the difference between the element detected in sensor data and the element stored in 58, requiring the post-processing only to monitor respective threshold values in order to generate an attributional deviation.

The resolution of the voxel grid of the map feature map corresponds to the output voxel grid (which may comprise object anchors), so that the index of the evaluated anchor or voxel index in the output grid may correspond to the same voxel index in the map feature map (second input of the network). The following assignment is therefore unequivocally specified: identifier of the element to voxel index of the map feature map to voxel index of the network output.

Additionally, using the LUT, implausible verification, insertion, and substitution predictions made by the network may be filtered, if the LUT determines that no element in 58 as matched for to a specific voxel for evaluation.

In the preferred embodiment of this invention, discrete attributes providing a detailed classification (e.g., a traffic sign class) are again evaluated using a subsequent projection of an initially verified element into the image plane as described previously. However, such classification may be performed by the network 53 directly, especially if the camera modality is integrated as described for the second embodiment.

Regarding the preferred definition of a substitution, only the major class of an element must differ between the real world and the stored map at a specific location (e.g., a sign being substituted by a traffic light). However, a substitution may be defined differently in another embodiments by incorporating also discrete attributes into the definition, e.g., a traffic sign class, or omitting the substitution state entirely.

It should be noted that, instead of predicting the continuous attributes of elements (or verifications and deviations, respectively) directly, it may be beneficial to predict the attributional difference between the (real world) element found in the sensor data and the map hypothesis. Further, such procedure may be integrated into the deviation simulation, as the continuous attributes of elements in the map can easily be adopted - yielding an data augmentation strategy, by which the amount of training data to predict attributional deviations can be increased indefinitely.

To train the network, two approaches may be used. In the first approach, real world deviations are used, whereby a deviating map is used as input to the network, whereas the sensor data corresponds to a corresponding, corrected map. The annotated deviations between the deviating and the corrected map are used to create the classification targets regarding the prediction of the evaluation state. In the second approach, implementing the preferred embodiment, deviations are simulating using a single map only that corresponds to the sensor data input. Such a map is assumed to be correct and deviations are induced in a meaningful way during training of the network. To induce deviations, the following procedure may be applied. To create a deletion, an element is deleted from the map but remains present in the sensor data. On the other hand, to create an insertion, the element remains in the map data but is deleted from the sensor data, e.g., by deleting respective points within the bounding shape of the element becoming an insertion. Thereby, groups of elements in a semantical relation (e.g., traffic signs and lights attached to a pole) are removed as a whole, if they cannot exist alone (e.g., removing all signs and lights if the pole considered as insertion and removed from the point cloud).

Also, insertions may be created by placing elements randomly in the map, preferably where sensor data belonging to other objects are present (e.g., placing a pole in the map where sensor data belonging to some vegetation or other infrastructure is present). Substitutions may be generated by replacing map elements by others of a different type within the map. Thereby, realistic bounding shapes may be generated for the replacing element, with its position slightly modified to account for realistic displacements seen in the real world, e.g., if a traffic sign is replaced with a traffic light but mounted at a slightly different location on the respective pole in the real world.

Overall, several advantages may be observed by implementing the invention and its embodiments: The invention and its embodiments provide an approach to map deviation detection based on a DNN that receives both map data and sensor data as input data. With this additional map input, fewer measurements are potentially required to either verify or falsify the correctness of an existing hypothesis, as respective measurements can be compared to an expected measurement distribution for a specific type of map element, whereby such distribution is learned by the network and does not have to be derived manually. Using a DNN, contextual knowledge from the environment or scene can be incorporated to facilitate the deviation detection task. Additionally, the network can also incorporates the detection of elements missing in the HD map, for which no prior hypotheses are available. This is eliminating the need for additional detection methods. The DNN may directly predicting map deviations, circumventing the need for a component that compares predicted objects with the stored map to obtain deviations.

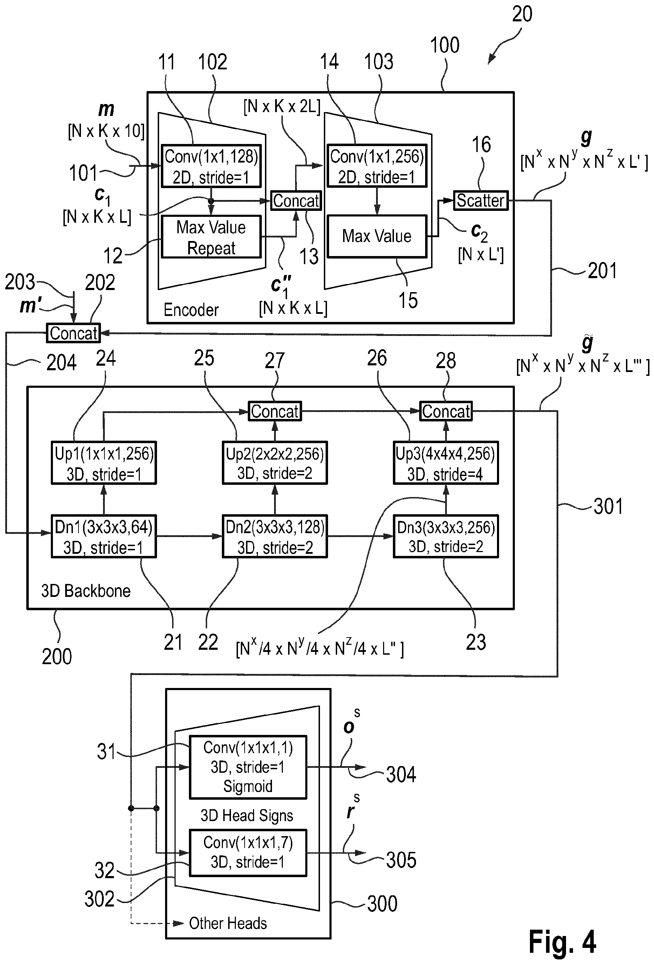

Fig. 4 illustrates a network architecture 20 as an exemplary embodiment of the suggested concept of the present invention. The exemplary embodiment of a network architecture in Fig. 4 is suitable for providing a map deviation detection. The network is capable of predicting traffic signs, traffic lights and pole-like objects simultaneously. The integration of further map elements may be possible, e.g., markings, lanes, or construction site elements.

The network architecture 20 enables three-dimensional operations and comprises three stages: an encoder 100, a backbone 200, and head 300. The three stages are connected in order to process point cloud data. In this embodiment the encoder 100 is a two-stage encoder and comprises two encoder stages 102, 103. The decoder 300 comprises one decoder stage 302.

In Fig. 4, an encoder component 11 provides a 2D convolution ("2D") Conv($1 \times 1$, $F$) with input dimension [$N \times K \times 10$] using $F$ kernels of size $1 \times 1 \times 10$. The backbone 200 provides 3D convolutions ("3D"), e.g., Conv($1 \times 1 \times 1$, $F$) with [$N^x \times N^y \times N^z \times L'''$]-dimensional input using $1 \times 1 \times 1 \times L'''$-sized kernels. The components "Concat" 27, 28 indicate a concatenation component performing one or a plurality of concatenation operations. Downsampling (Dn) blocks 21, 22, 23 comprise multiple convolution layers. Upsampling (Up) blocks 25 on the other hand apply transposed convolution on the input.

Encoder Architecture

The encoder stage 100 learns an optimal feature representation for a point cloud. 2D convolution is provided in the encoder components 11, 14. As a first processing step, a point cloud may be discretized to obtain a 3D voxel grid with $N^x$, $N^y$, and $N^z$ voxels in the x-, y-, and z-dimension of the grid. Using a 3D voxel grid allows for the individual resolution of vertically stacked objects. Thereby, each point $p$ of the point cloud is sorted into a 3D voxel grid with $N^x$, $N^y$, and $N^z$ voxels in the x-, y-, and z-dimension of the grid. Then, only the N occupied voxels with a maximum of, for example, $K = 100$ points per voxel are collected into a second grid m, being a tensor of size [$N \times K \times 10$], whereby each point provides 10 features (the Cartesian point coordinates x, y, z, and the intensity of the reflected beam, the three-dimensional mean value of all Cartesian point coordinates, and the three-dimensional offset of each point to the voxel's center coordinate). Further, also the symbols $c_1$, $c_1''$, $c_2$, $g$, $\tilde{g}$, $m'$, $o^s$, and $r^s$ indicate tensors, respectively.

Each point contained in $c_1$ is mapped to 128 features in the first encoding stage using the first 2D convolution component, providing $c_1$ of size [$N \times K \times L$] with $L = 128$. For each voxel, the maximum value operation provides a single "maximum feature vector" that contains the respective maximum value for each of the 128 features among all points in that voxel. This maximum feature vector is repeated $K$ times to provide tensor $c''_1$ of size $[N \times K \times L]$ that is concatenated to $c_1$ along the feature dimension to provide the input of size $[N \times K \times 2L]$ to the second encoder stage. Again, each point is subsequently mapped to $L' = 256$ features using the second 2D convolution component. The second maximum operation provides the maximum feature vector for all points in a voxel, yielding the $N$ final feature vectors for the respective voxels contained in $c_2$ of size $[N \times L']$.

Finally, in Fig. 4 the $N$ obtained feature vectors are scattered back to their original position in the voxel grid using the scatter component 16, with zero-padding applied to empty voxels, which provides the encoded LiDAR grid $g$ 201 of size $[N^x \times N^y \times N^z \times L']$. The tensor $g$ is provided to a concatenation component 202 that is adapted to receive a map feature map input $m'$ 203 in order to fuse both $g$ and $m'$ (being the aforementioned "middle fusion"). To this end, $M'$ map features (e.g., comprising the encoded main class and various regression features of a map element) for a voxel are concatenated to the $L'$ (encoded) LiDAR features for that voxel, providing an input 204 of size $[N^x \times N^y \times N^z \times (L' + M')]$ to the backbone 200.

Backbone Architecture

The backbone stage 200 is a 3D backbone stage processing 3D data. The 3D backbone stage 200 receives $g$ as the (fused) output 203 of the encoder 100. The backbone stage 200 comprises a down-stream network 21, 22, 23 and an up-stream network 24, 25, 26, utilizing 3D (transposed) convolutions in both networks on the 3D voxel grid, which allows for the individual detection individually stacked objects such as traffic signs. The down-stream network comprises three components 21, 22, 23 ("Dn" in Fig. 4), comprising 3, 5, and 5 layers, respectively. Each layer comprises one convolution, one batch normalization and one ReLU activation (ReLU = rectified linear unit). Thus, each Dn-component 21, 22, 23 comprises multiple 3D convolution operations. The down-stream network downsamples the input voxel grid using strides of 2. In the preferred embodiment, the input voxel grid is downsampled by a factor of 4 providing $L'' = 256$ features.

Using the up-stream network, feature maps received at different scales by the down-stream network are upsampled to the original grid size, and are subsequently concatenated to obtain a grid of abstract features as input to the network heads, providing $L''' = 3 \cdot L''$ features in total. Up-stream blocks 24, 25, 26 are each comprising one 3D transposed convolution, followed by one batch normalization and one ReLU activation.

Decoder with Detection and Regression Heads

The 3D detection and regression heads 300 may operate in a single-shot fashion. Thereby, the network provides object detections in one single processing step. Within the heads, the network predicts existence likelihoods and regresses bounding rectangles for a set of predefined objects, so-called "anchors". An individual network head is attached to the backbone for each map element type, e.g., yielding three network heads if traffic signs, poles, and traffic lights are considered. In the exemplary embodiment shown in Fig. 4, a head 302 (that can be understood as decoder) for traffic signs is attached to the backbone. For each voxel or anchor, respectively, an existence likelihood may be predicted as tensor $o^s$ of size $[N^x \times N^y \times N^z \times 1]$ if the architecture implements the object detection DNN 50. Alternatively, the deviation detection DNN 51 may predict four class likelihoods representing the evaluation state (verification, deletion, insertion, substitution), with $o^s$ 304 being of size $[N^x \times N^y \times N^z \times 4]$ in this case. Furthermore, the "3D head signs" 302 may predict respective regression features, e.g., 7 in number to encode a bounding rectangle in 3D space (x-, y-, and z-position, rectangle width and height, and orientation encoded as complex number), yielding $r^s$ 305 of size $[N^x \times N^y \times N^z \times 7]$.

Multiple anchors can make predictions for the same real-world object. Thus, in a processing step within each head, e.g., 302, respective overlapping bounding rectangles are filtered using non-maximum-suppression to obtain the final object list. Thereby, only the objects with the highest existence likelihood remain. To measure the overlap, criteria for matching may be used.

Dataset and Training Procedure

To train the DNN, a specialized dataset may be utilized. Specifically, high-density point clouds may be applied, which enable the user to manipulate the point density for ablation studies, e.g., simulating different laser scanners providing different point cloud densities, or training the network to work at different point densities allowing for a robust functioning of the network also in case of heavy rain or snow. Also, assuming nearly perfect spatial alignment of the HD map data with the LiDAR data, the user is also enabled to induce artificial localization errors, e.g., during the training procedure. In consequence, the network may offer a greater robustness against such localization errors when deployed in the real world.

Examples of Applications

The network architecture 20 is suitable for predicting various types of HD map elements, specifically pole-like objects, traffic lights, traffic signs, line-shaped markings and polygon-shaped markings, lanes, etc. For each element type, specific object anchors have to be designed, as well as corresponding matching strategies. Such matching strategies are necessary to match ground-truth objects to object anchors during training. Matching strategies comprise one or more association criteria, measuring the overlap of two elements of the same type, e.g., to identify matching anchors during training, to associate predicted objects with ground truth objects, and during non-maximum-suppression.

An alternative embodiment includes so-called point-based networks, whereby the network predicts, e.g., evaluation state and bounding shape parameters not for a predefined anchor grid but for each point individually. To incorporate the deviating map as input for such network, each point of the point cloud may be matched to one map element in the deviating map 58 as aforementioned, e.g., by checking if a point lies within or in close proximity of the bounding shape of a respective map element. In case of a match, the map element type and its bounding shape features may be added to point features, formerly only being the Cartesian coordinate and the intensity of the reflected beam.

The suggested approaches may be applicable to various types of HD map elements and may be capable to integrate different sensor modalities, such as LiDAR, RADAR and camera. The approaches are suitable for both high-density LiDAR point and sparse LiDAR point clouds obtained from onboard laser scanners.

However, high-density point clouds (e.g., typically used to generate a respective HD map) are particularly suitable to train a network for MDD, as they may provide accurate labels both in terms of completeness and spatial alignment between sensor and map data, as such point clouds are typically used to generate an underlying HD map in the first place. Such an optimal dataset has several key advantages compared to using data received from onboard sensors. Nearly all deviations are known, apart from those due to annotation mistakes, as artificial deviations may be induced artificially by changing both map and LiDAR data intentionally. Further, the usage of high-density point clouds without occlusions allows for respective ablations studies, where both a reduced point density (simulating onboard scans or bad weather conditions) and occlusions can be exactly controlled, or may be applied during network training for an increase robustness regarding degenerated sensor data. Furthermore, the highly-precise spatial data alignment principally allows for the induction of artificial localization errors in a controlled fashion, although the proposed method is robust against average localization errors seen in the real world.

In particular, it is suggested a deep learning-based approach to detect map deviations in erroneous or outdated high-definition (HD) maps. One approach is to encode both map data and sensor data as feature maps that are input to a neural network, which then detects and specifies deviations. The network may extend to various kinds of HD map elements and may allow principally an integration of different sensor modalities. The network may be trained and evaluated for a vehicle environment, e.g., for traffic signs, traffic lights and pole-like objects, among other map element types, using a LiDAR modality and the like. The network may perform well especially in challenging scenes that feature a reduced point density, e.g., due to heavy rain or snow or in the case of partial occlusion of map elements or sensor data of reduced quality.

The additional map input of the map processing path is enabling an improvement regarding the evaluation of existing map hypotheses (verification, insertion, or substitution). Thereby, by using a neural network, the expected distributions for plausible measured values of map elements (simplified confirmation / refutation of an existing map hypothesis) avoid a manual modeling, since the distributions are learned independently within the network. The (refined) association of sensor to map data may be internally learned and optimized in the neural network. Thus, the suggested deviation detection method and system may simplify the detection of deviations by leveraging the map as a source of prior hypotheses regarding possible element locations and features. Further, the network is able to incorporate the detection of elements missing in the HD map, for which no prior hypotheses are available, thus, eliminating the need for additional detection methods.

**Reference signs**

| 20, 30 | network architecture |
| 11, 14 | 2D convolution component |
| 12 | max value repeater performing a maximum and repeat operation |
| 13, 27, 28 | concatenation component |
| 15 | max value operation |
| 16 | scatter |
| 21, 22, 23 | component of a down-stream network, comprising 3D convolution |
| 24, 25, 26 | component of an up-stream network comprising 3D transposed convolution |
| 31, 32 | 3D convolution as part of the network head |
| 50 | deep neural network for object detection |
| 51, 52 | system for the deviation detection component |
| 53 | deep neural network for deviation detection |
| 54 | map processing path |
| 55 | point cloud input for voxelization |
| 56 | voxelization |
| 57 | voxelized point cloud as input to the encoder |
| 58 | list of deviating map elements as input for map encoding as well as input to the comparison component |
| 59 | map encoding component |
| 60 | output of the map encoding component |

| | |
|---|---|
| | (encoded deviating map) |
| 61 | output of the encoder (encoded LiDAR feature map) |
| 62 | output of the backbone (abstract features) |
| 63, 64, 65 | output of the decoder |
| 66 | post processing component |
| 67 | output of the post processing component (list of predicted map elements) |
| 68 | connection providing the deviating map elements |
| 70 | comparison component |
| 71 | list of evaluated map elements as output of the deviation detection component |
| 100 | encoder stage |
| 101 | input (LiDAR feature map) |
| 102, 103 | encoder stage |
| 200 | backbone stage |
| 201 | input |
| 202 | concatenation component |
| 203 | map feature map input |
| 204 | output (fused LiDAR and map feature map) |
| 300 | network |
| 301 | output of backbone as well as input to detection and regression heads |
| 302 | "3D head signs" as decoder comprising detection and regression outputs |
| 304, 305 | output |

**Claims**

1. Method for a detection of map deviations comprising

   encoding map data (55) and receiving a first feature map (57);
   encoding sensor data (58) and receiving a second feature map (60),
   wherein the sensor data (58) is representing one or a plurality of real world objects in a vehicle environment;
   providing the first feature map (57) and the second feature map (60) as input data to a neural network (50, 53); and
   detecting deviations between the sensor data (55) and the map data (58).

2. Method according to claim 1, wherein detecting deviations is based on a comparison using a map-supported object detection DNN.

3. Method according to claim 1, wherein detecting deviations is provided by using a map-supported deviation detection DNN.

4. Method according to any one of the claims 1 to 3, further comprising
   training detecting deviations using artificially included map deviations using a single map or using real world deviations obtained from two deviating maps.

5. Method according to any one of the claims 1 to 4, further comprising
   utilizing specialized anchors grids predicting existence likelihoods for evaluation states and bounding shape features for each type of map elements separately.

6. Method according to any one of the claims 1 to 5, further comprising
   processing three-dimensional data within the neuronal network (53).

7. Method according to any one of the claims 1 to 6, further comprising
   utilizing a point-based architecture for the network (53), performing the object detection or deviation detection for each point individually instead for an anchor grid.

8. Method according to any one of the claims 1 to 7, wherein the method is performed in a real time mode or offline within a computing cluster processing large amounts of data.

9. Method according to any one of the claims 1 to 8, wherein the method is applicable for the deviation detection of traffic signs, traffic lights, pole-like objects, curbs, lanes, markings, and/or construction site elements such as fences, delineators, and cones.

10. System for a detection of map deviations comprising

    a neuronal network (53) comprising an encoder (100), a backbone (200) and a decoder (300), and a map processing path (54) comprising a map encoding component (59),
    wherein the backbone (200) is receiving a first input (61) from the encoder (100), wherein the first input (61) is obtained by encoding sensor data (57); and
    wherein the backbone (200) is receiving a second input (60) from a map encoding component (59), wherein the second input (60) is a second feature map comprising encoded map data.

11. System according to claim 10 further comprising a comparison component (70) which is adapted to receive a deviating list of map elements (58) and a predicted list of map elements (67) as input.

12. System according to claim 10 or 11, wherein the neuronal network (53) is providing an output (63, 64, 65) to a post-processing component (66), wherein the post-processing component (66) is providing an output (67) to the comparison component (70).

**13.** System according to any one of the claims 10 to 12, wherein the first input (61) is a three dimensional voxel grid.

**14.** System according to any one of the claims 10 to 13, wherein the system is an onboard system in a vehicle or an offline system processing large amounts of data.

**15.** Vehicle, in particular an autonomous driving vehicle, comprising a system according to any one of the claims 10 to 14.

Fig. 1

Fig. 2

Fig. 3

**Fig. 4**

Europäisches
Patentamt

European
Patent Office

Office européen
des brevets

## EUROPEAN SEARCH REPORT

Application Number

EP 22 21 0575

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PLACHETKA CHRISTOPHER ET AL: "3DHD CityScenes: High-Definition Maps in High-Density Point Clouds", 2022 IEEE 25TH INTERNATIONAL CONFERENCE ON INTELLIGENT TRANSPORTATION SYSTEMS (ITSC), IEEE, 8 October 2022 (2022-10-08), pages 627-634, XP034216249, DOI: 10.1109/ITSC55140.2022.9921866 [retrieved on 2022-11-01] * abstract * * page 628 – page 633 * ----- | 1-15 | INV. G06N3/0455 G06N3/0464 G06N3/0895 ADD. G06T17/05 |
| A | CN 114 511 846 A (UNIV ZHEJIANG) 17 May 2022 (2022-05-17) * the whole document * ----- | 1-15 | |
| A | ZHOU YIN ET AL: "VoxelNet: End-to-End Learning for Point Cloud Based 3D Object Detection", EYE IN-PAINTING WITH EXEMPLAR GENERATIVE ADVERSARIAL NETWORKS, [Online] 17 November 2017 (2017-11-17), pages 4490-4499, XP093042118, DOI: 10.1109/CVPR.2018.00472 ISBN: 978-1-5386-6420-9 Retrieved from the Internet: URL:https://arxiv.org/pdf/1711.06396v1.pdf > [retrieved on 2023-04-24] * the whole document * ----- | 1-15 | TECHNICAL FIELDS SEARCHED (IPC) G06N G06T G01S |

The present search report has been drawn up for all claims

| Place of search | Date of completion of the search | Examiner |
|---|---|---|
| The Hague | 1 May 2023 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 21 0575

This annex lists the patent family members relating to the patent documents cited in the above-mentioned European search report.
The members are as contained in the European Patent Office EDP file on
The European Patent Office is in no way liable for these particulars which are merely given for the purpose of information.

01-05-2023

| Patent document cited in search report | Publication date | Patent family member(s) | Publication date |
|---|---|---|---|
| CN 114511846 A | 17-05-2022 | NONE | |

EPO FORM P0459